# EUROPEAN PATENT SPECIFICATION

(11) **EP 3 968 017 B1**
(45) Date of publication and mention of the grant of the patent: **15.01.2025**
(21) Application number: 20825696.6
(22) Date of filing: 19.06.2020
(51) Int. Cl.: G01N 30/88, B01D 15/34, G01N 24/08, C08J 11/24, G01N 30/06

(54) **METHOD FOR ANALYZING COPOLYCARBONATE**
VERFAHREN ZUR ANALYSE VON COPOLYCARBONAT
PROCÉDÉ D'ANALYSE DE COPOLYCARBONATE

(30) Priority: 20.06.2019 KR 20190073540
(43) Date of publication of application: 16.03.2022
(73) Proprietor: LG Chem, Ltd., Seoul 07336 (KR)
(72) Inventor: KIM, Hyo Yong, Daejeon 34122 (KR); RYU, Jin Sook, Daejeon 34122 (KR); OH, Sunok, Daejeon 34122 (KR); OH, Sung Joon, Daejeon 34122 (KR)
(74) Representative: Goddar, Heinz J.
(86) International application number: PCT/KR2020/008009
(87) International publication number: WO 2020/256494

(56) References cited:
- WO-A2-2016/089135
- KR-A- 20180 043 683
- US-A1- 2012 202 034
- US-A1- 2016 222 191
- US-A1- 2018 051 156
- LIU LU ET AL: "Depolymerization kinetics for thermoplastic polyurethane elastomer degradation in subcritical methanol", POLYMER DEGRADATION AND STABILITY, vol. 140, 25 April 2017 (2017-04-25), pages 126 - 135, XP085035134, ISSN: 0141-3910, DOI: 10.1016/J.POLYMDEGRADSTAB.2017.04.020
- RAúL PIñERO ET AL: "Chemical recycling of polycarbonate in a semi-continuous lab-plant. A green route with methanol and methanol–water mixtures", GREEN CHEMISTRY, vol. 7, no. 5, 1 January 2005 (2005-01-01), GB, pages 380, XP055728752, ISSN: 1463-9262, DOI: 10.1039/b500461f
- HU, L.-C. OKU, A. YAMADA, E.: "Alkali-catalyzed methanolysis of polycarbonate. A study on recycling of bisphenol A and dimethyl carbonate", POLYMER, ELSEVIER SCIENCE PUBLISHERS B.V., GB, vol. 39, no. 16, 1 July 1998 (1998-07-01), GB, pages 3841 - 3845, XP004121005, ISSN: 0032-3861, DOI: 10.1016/S0032-3861(97)10298-1
- SHENGYU FENG, JIE ZHANG, DAKE WANG, MINGYAN WU, ZHAOTAN YU: "Synthesis and characterization of 3-(2,3-dihydroxypropoxy)propyl-terminated polydimethylsiloxanes", JOURNAL OF APPLIED POLYMER SCIENCE, JOHN WILEY & SONS, INC., US, vol. 94, no. 1, 15 September 2004 (2004-09-15), US, pages 110 - 115, XP055767222, ISSN: 0021-8995, DOI: 10.1002/app.20749
- MATSUKAWA, K. ; INOUE, H.: "Synthesis of Alpha,co-bis(p-hydroxyphenyl ) polysiloxanes", POLYMER, ELSEVIER SCIENCE PUBLISHERS B.V., GB, vol. 33, no. 3, 1 January 1992 (1992-01-01), GB, pages 667 - 670, XP024117647, ISSN: 0032-3861, DOI: 10.1016/0032-3861(92)90752-I

## Description

### BACKGROUND OF THE INVENTION

### (a) Field of the Invention

### Cross-reference to Related Application

The present application is based on, and claims priority from, Korean Patent Application Nos. 10-2019-0073540 and 10-2020-0074897, filed on June 20, 2019 and June 19, 2020, respectively.

The present invention relates to a method of analyzing a copolycarbonate.

### (b) Description of the Related Art

Polycarbonate resins are prepared by condensation-polymerization of an aromatic diol such as bisphenol A with a carbonate precursor such as a phosgene, and have excellent impact strength, dimensional stability, heat resistance, transparency, etc. Thus, the polycarbonate resins have application in a wide range of uses, such as exterior materials of electrical and electronic products, automobile parts, building materials, optical components, etc.

Recently, in order to apply these polycarbonate resins to more varied fields, many studies have been made to obtain desired physical properties by copolymerizing two or more aromatic diol compounds having different structures from each other and introducing units having different structures into the main chain of the polycarbonate.

Especially, recent studies have been conducted on introducing a polysiloxane structure into the main chain of the polycarbonate.

Physical properties of the polycarbonate are greatly influenced by its molecular weight and molecular weight distribution. Therefore, analysis of the molecular weight of the polycarbonate is the most basic and important analysis in terms of predicting the physical properties of the polymer.

Generally, as a method of analyzing a molecular weight of a polymer such as polycarbonate, an end group analysis, a method of using colligative properties, a light scattering method, a ultracentrifugal method, viscometry, or gel permeation chromatography (GPC) is frequently used.

The most representative method of analyzing a molecular weight of a polymer is gel permeation chromatography, which is one of the most useful methods of measuring a ratio of a relative molecular weight using a standard material, of which a molecular weight is known.

Meanwhile, in the case of a copolycarbonate in which a polysiloxane structure is introduced into the main chain by copolymerizing two or more aromatic diol compounds having different structures from each other, a method of measuring the molecular weights of the diol compounds decomposed by cleaving carbonate bonds of the copolycarbonate may be generally used in order to measure the content and the molecular weight of different repeating units included in the corresponding copolycarbonate. A method of cleaving the carbonate bonds may include thermal pyrolysis, solvolysis using a supercritical fluid (methanol, ethanol, toluene, etc.), cleavage using microwaves, etc. However, in the above cleavage methods, a large amount of energy is used. Therefore, since polysiloxane is also decomposed into polysiloxane units, it is difficult to accurately analyze the content and the molecular weight of the original repeating units.

Alternatively, there is a method of using nuclear magnetic resonance (NMR) without decomposition of the copolycarbonate. When the nuclear magnetic resonance method is used, an average molecular weight of the polysiloxane used in the copolycarbonate may be calculated, but a molecular weight distribution of the polysiloxane, which influences physical properties, may not be determined, and when two or more different polysiloxane structures are introduced, the molecular weights of the respective polysiloxanes may not be determined.

Accordingly, there is a demand for a method of analyzing a polymer, the method capable of accurately analyzing a content ratio, a molecular weight, and a molecular weight distribution of each repeating unit included in copolycarbonate, in which the polysiloxane structure is introduced into the main chain. The article by LIU LU ET AL: "Depolymerization kinetics for thermoplastic polyurethane elastomer degradation in subcritical methanol", POLYMER DEGRADATION AND STABILITY, vol. 140, 25th April 2017, discloses a method of analyzing a copolymer. The method comprises reacting the copolymer with methanol and performing gel permeation chromatography of the decomposed copolymer compound.

### SUMMARY OF THE INVENTION

There is provided a method of analyzing a copolycarbonate, in which a polysiloxane structure is introduced into the main chain of a polycarbonate, the method capable of more accurately analyzing a weight average molecular weight, a number average molecular weight, and a molecular weight distribution of a polysiloxane-containing aromatic diol compound which is used as a starting material.

To solve the above problem, there is provided a method as claimed in claim 1.

### DETAILED DESCRIPTION OF THE EMBODIMENTS

Hereinafter, a method of analyzing a copolycarbonate according to one exemplary embodiment of the present invention will be described.

The method of analyzing a copolycarbonate according to a specific embodiment of the present invention includes the steps of reacting the copolycarbonate including a first repeating unit derived from an aromatic diol compound and a second repeating unit derived from a polysiloxane-containing aromatic diol compound with methanol to decompose the copolycarbonate into the aromatic diol compound and the polysiloxane-containing aromatic diol compound; and performing gel permeation chromatography of the decomposed polysiloxane-containing aromatic diol compound.

A polycarbonate is prepared by condensation-polymerization of an aromatic diol compound such as bisphenol A with a carbonate precursor such as a phosgene, and has excellent impact strength, dimensional stability, heat resistance, transparency, etc. Thus, the polycarbonate has application in a wide range of uses, such as exterior materials of electrical and electronic products, automobile parts, building materials, optical components, etc.

To further improve physical properties of the polycarbonate, a polysiloxane structure may be introduced into the main chain of the polycarbonate, and as a result, various physical properties may be improved.

Meanwhile, the physical properties of the polycarbonate are greatly influenced by its molecular weight and molecular weight distribution. Therefore, analysis of the molecular weight of the polycarbonate is the most basic and important analysis in terms of predicting the physical properties of the polymer.

However, in the case of the copolycarbonate, in which a polysiloxane structure is introduced into the main chain by copolymerizing two or more aromatic diol compounds having different structure from each other, it is not easy to accurately analyze the molecular weight of only the repeating unit containing the polysiloxane structure.

Alternatively, there is a method of analyzing the copolycarbonate using nuclear magnetic resonance (NMR) without decomposition of the copolycarbonate. However, when two or more different kinds of polysiloxane structures are introduced into the copolycarbonate, it is difficult to distinguish respective polysiloxane structures from each other, and although analysis of the molecular weight is possible, it is impossible to analyze the molecular weight distribution, which has a large influence on physical properties of the polymer.

Accordingly, it was found that the copolycarbonate including the first repeating unit derived from the aromatic diol compound and the second repeating unit derived from the polysiloxane-containing aromatic diol compound is reacted with methanol to decompose the copolycarbonate into the aromatic diol compound and the polysiloxane-containing aromatic diol compound which are original starting materials, and the molecular weight of the decomposed polysiloxane-containing aromatic diol compound may be measured by gel permeation chromatography (GPC), leading to the present invention.

The first repeating unit derived from the aromatic diol compound is formed by reacting the aromatic diol compound with a carbonate precursor, and the first repeating unit is distinguished from the second repeating unit described below in that it does not include polysiloxane.

The first repeating unit derived from the aromatic diol compound may be specifically represented by Chemical Formula 1: 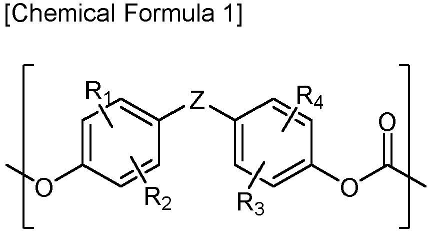 in Chemical Formula 1,
R₁ to R₄ are each independently hydrogen, C₁₋₁₀ alkyl, C₁₋₁₀ alkoxy, or halogen, and
Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

In Chemical Formula 1, preferably, R₁ to R₄ are each independently hydrogen, methyl, chloro, or bromo.

Further, Z is preferably linear or branched C₁₋₁₀ alkylene unsubstituted or substituted with phenyl, and more preferably, methylene, ethane-1,1-diyl, propane-2,2-diyl, butane-2,2-diyl, 1-phenylethane-1,1-diyl, or diphenylmethylene. Further, Z is preferably cyclohexane-1,1-diyl, O, S, SO, SO₂, or CO.

Preferably, the repeating unit represented by Chemical Formula 1 may be derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and a,ω-bis[3-(o-hydroxyphenyl)propyl]polydimethylpolysiloxane.

The description 'derived from an aromatic diol compound' means that a hydroxy group of the aromatic diol compound and a carbonate precursor are reacted to form the repeating unit represented by Chemical Formula 1.

The repeating unit represented by Chemical Formula 1 is derived from an aromatic diol compound represented by the following Chemical Formula 1-1: 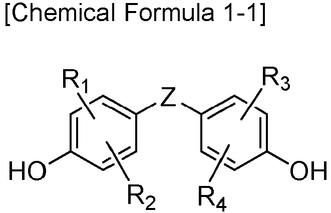 in Chemical Formula 1-1,
R₁ to R₄, and Z are the same as defined in Chemical Formula 1.

For example, when bisphenol A, which is an aromatic diol compound, and triphosgene, which is a carbonate precursor, are polymerized, the repeating unit represented by Chemical Formula 1 may be represented by the following Chemical Formula 1-2:

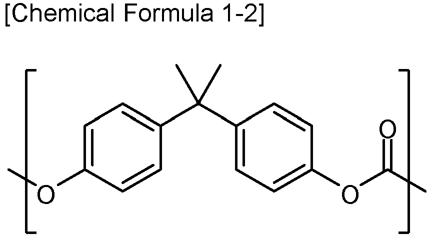

The carbonate precursor may include one or more selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl)carbonate, phosgene, triphosgene, diphosgene, bromophosgene and bishaloformate. Preferably, triphosgene or phosgene may be used.

The structure of the polysiloxane-containing aromatic diol compound which is an analysis target of the present invention is not particularly limited, as long as a polysiloxane residue is included in the compound, and a bond cleaved by alkali-catalyzed alcoholysis, for example, an ester bond is not included. When the compound includes the bond cleaved by alkali-catalyzed alcoholysis, it may be decomposed by methanolysis described below. Therefore, it is difficult to accurately measure the molecular weight by applying the analysis method of the present invention alone. However, when the structure of the polysiloxane-containing compound is analyzed by applying NMR analysis in combination with the analysis method of the present invention, it is possible to analyze the molecular weights of the respective repeating units.

According to one exemplary embodiment of the present invention, the second repeating unit derived from the polysiloxane-containing aromatic diol compound may be represented by the following Chemical Formula 2 to Chemical Formula 5, but is not limited thereto: 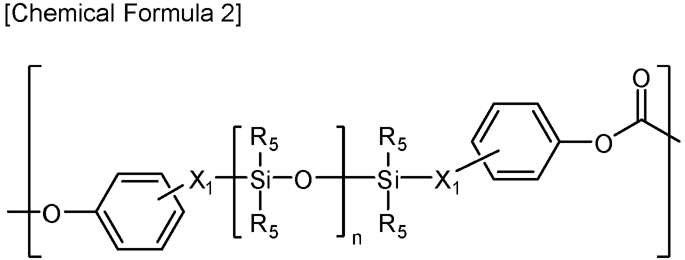 in Chemical Formula 2,
X₁ is each independently C₁₋₁₀ alkylene,
R₅ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
n is an integer of 10 to 200, 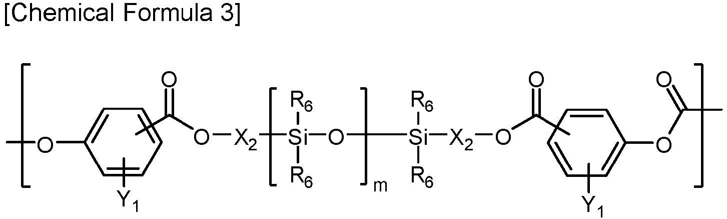 in Chemical Formula 3,
   X₂ is each independently C₁₋₁₀ alkylene,
   Y₁ is each independently hydrogen, C₁₋₆ alkyl, halogen, hydroxy, C₁₋₆ alkoxy, or C₆₋₂₀ aryl,
   R₆ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
   m is an integer of 10 to 200, 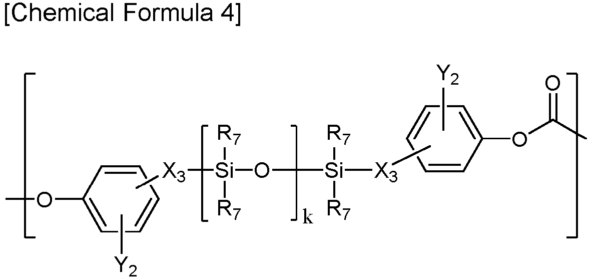 in Chemical Formula 4,
      X₃ is each independently C₁₋₁₀ alkylene,
      Y₂ is each independently hydrogen, C₁₋₆ alkyl, halogen, hydroxy, C₁₋₆ alkoxy, or C₆₋₂₀ aryl,
      R₇ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
      k is an integer of 10 to 200, 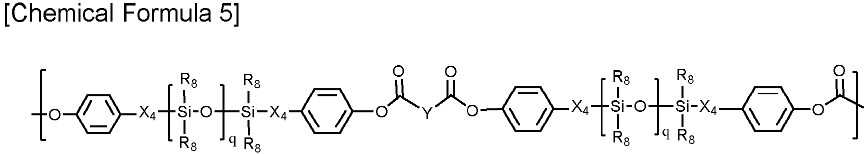 in Chemical Formula 5,
         X₄ is each independently C₁₋₁₀ alkylene,
         Y is C₁₋₁₀ alkylene or C₆₋₂₀ arylene,
         R₈ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
         q is an integer of 10 to 200.

In Chemical Formula 2, preferably, X₁ is each independently C₂₋₁₀ alkylene, more preferably, C₂₋₄ alkylene, and most preferably, propane-1,3-diyl.

Preferably, R₅ is each independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. Preferably, R₅ is each independently C₁₋₁₀ alkyl, more preferably, C₁₋₆ alkyl, much more preferably, C₁₋₃ alkyl, and most preferably, methyl.

Preferably, n is an integer of 10 or more, 15 or more, 20 or more, 25 or more, 30 or more, 31 or more, or 32 or more, and 50 or less, 45 or less, 40 or less, 39 or less, 38 or less, or 37 or less.

In Chemical Formula 3, preferably, X₂ is each independently C₂₋₁₀ alkylene, more preferably, C₂₋₆ alkylene, and most preferably isobutylene.

Preferably, Y₁ is hydrogen.

Preferably, R₆ is each independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. Preferably, R₆ is each independently C₁₋₁₀ alkyl, more preferably, C₁₋₆ alkyl, much more preferably, C₁₋₃ alkyl, and most preferably, methyl.

Preferably, m is an integer of 30 or more, 35 or more, 40 or more, 45 or more, 46 or more, 47 or more, or 48 or more, and 70 or less, 65 or less, 60 or less, 55 or less, 54 or less, 53 or less, or 52 or less.

Preferably, the repeating unit represented by Chemical Formula 2 may be represented by the following Chemical Formula 2-2: 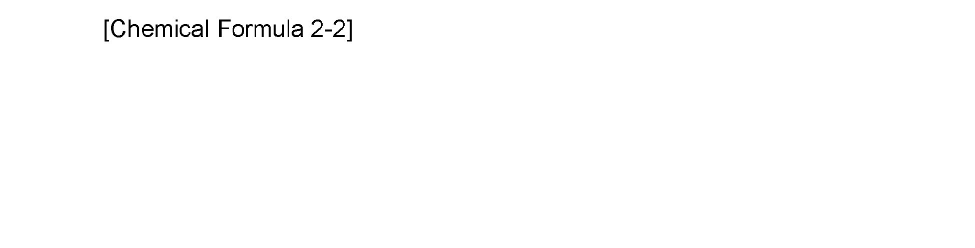 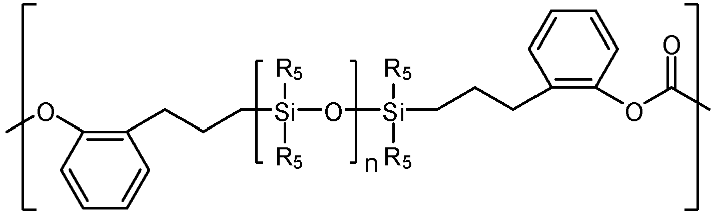 in Chemical Formula 2-2, R₅ and n are the same as defined in Chemical Formula 2. Preferably, R₅ is methyl.

Preferably, the repeating unit represented by Chemical Formula 3 may be represented by the following Chemical Formula 3-2: 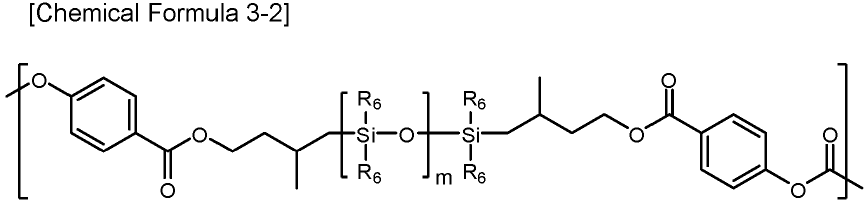 in Chemical Formula 3-2, R₆ and m are the same as defined in Chemical Formula 3. Preferably, R₆ is methyl.

The repeating unit represented by Chemical Formula 2 and the repeating unit represented by Chemical Formula 3 are derived from a polysiloxane compound represented by the following Chemical Formula 2-1 and a polysiloxane compound represented by the following Chemical Formula 3-1, respectively: 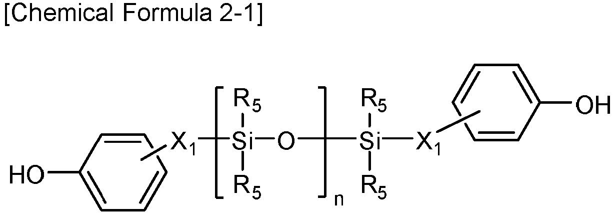 in Chemical Formula 2-1,
X₁, R₅, and n are the same as defined in Chemical Formula 2, 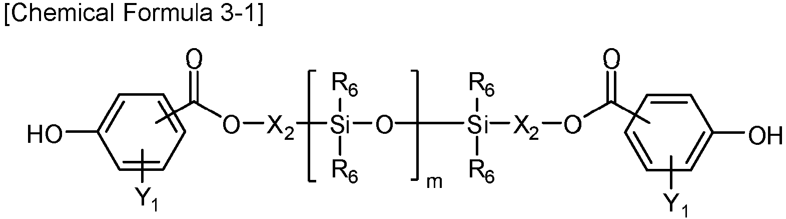 in Chemical Formula 3-1,
X₂, Y₁, R₆, and m are the same as defined in Chemical Formula 3.

The description derived from a polysiloxane compound' means that a hydroxy group of each polysiloxane compound and a carbonate precursor are reacted to form the repeating units represented by Chemical Formulae 2 to 5, respectively. Further, the carbonate precursors that may be used in the formation of the repeating units of Chemical Formulae 2 to 5 are the same as described in the carbonate precursor that may be used in the formation of the repeating unit of Chemical Formula 1 described above.

As described above, the copolycarbonate including the first repeating unit and the second repeating unit is reacted with methanol to decompose the copolycarbonate into the aromatic diol compound and the polysiloxane-containing aromatic diol compound which are starting materials.

According to the present invention, when the copolycarbonate is reacted with methanol under alkaline conditions, it is decomposed by an alkali-catalyzed alcoholysis reaction into the aromatic diol compound and the polysiloxane-containing aromatic diol compound, which are starting materials, respectively. In other words, according to the alkali-catalyzed alcoholysis reaction, the copolycarbonate is decomposed into the aromatic diol compound and the polysiloxane-containing aromatic diol compound.

More specifically, an alkali is dissolved in methanol to prepare an alkali hydroxide solution. The alkali used herein may be, for example, sodium hydroxide (NaOH), potassium hydroxide (KOH), or ammonium hydroxide (NH₄OH), but the present invention is not limited thereto.

When the alkali hydroxide solution thus prepared is reacted with copolycarbonate, the carbonate bond is decomposed by the alkali-catalyzed alcoholysis reaction, and as a result, the copolycarbonate is decomposed into the aromatic diol compound and the polysiloxane-containing aromatic diol compound. In this regard, the temperature of the alkali-catalyzed alcoholysis reaction is 40°C to 80°C, or 60°C to 70°C. In addition, the reaction time is not particularly limited, as long as it is a time for which the copolycarbonate may be completely decomposed. However, the reaction may be performed for, for example, 1 hr to 10 hr, or 2 hr to 8 hr, and in order to facilitate the reaction, the reaction may be performed under stirring using a magnetic bar, etc.

The reaction may be performed in a hydrocarbon-based solvent. For example, aliphatic hydrocarbon solvents having 5 to 12 carbon atoms, such as pentane, hexane, heptane, nonane, decane, and isomers thereof, aromatic hydrocarbon solvents such as toluene and benzene, chlorine-substituted hydrocarbon solvents such as dichloromethane and chlorobenzene, etc. may be used, but the present invention is not limited thereto.

According to the present invention, as described above, the copolycarbonate and methanol are reacted to decompose the copolycarbonate into the aromatic diol compound and the polysiloxane-containing aromatic diol compound, and then the decomposition product is quenched using liquid nitrogen without a separate extraction and/or purification process, and is diluted with a solvent such as THF, followed by GPC. Bisphenol, dimethyl carbonate, methanol, NaOH, and the like are present in the decomposition product, but a polymeric material which may be identified through GPC is only the polysiloxane-containing aromatic diol compound, and therefore, no additional extraction and/or purification processes are required. As described, since no separate extraction process is required after decomposition, the molecular weight and the molecular weight distribution of the polysiloxane-containing aromatic diol compound in copolycarbonate may be more accurately analyzed while the process is simplified.

Alternatively, after the reaction is completed, when the mixture containing the aromatic diol compound and the polysiloxane-containing aromatic diol compound is quenched with distilled water and/or toluene, and left at room temperature, it is separated into the crystalline aromatic diol compound and the amorphous polysiloxane-containing aromatic diol compound, and the separated polysiloxane-containing aromatic diol compound may be extracted, followed by GPC.

Next, the extracted polysiloxane-containing aromatic diol compound is subjected to gel permeation chromatography (GPC), and a GPC curve graph is obtained.

The weight average molecular weight, number average molecular weight, and molecular weight distribution of the extracted polysiloxane-containing aromatic diol compound may be obtained by the GPC.

The GPC is a kind of liquid-solid-phase liquid chromatography using an elution method, in which a large molecule is first eluted due to the size of a solute molecule. When molecules have the same size, they may be eluted at the same position, regardless of the type of solutes or the type of functional groups.

In the GPC, a mobile phase is based on a liquid chromatography grade, and may be used after filtration, and a solvent having a high viscosity is used by raising its temperature, and the solvent may be appropriately selected, taking the temperature of each solvent into consideration. When a polar solvent is used as the solvent, it is necessary to use an additive to prevent formation of micelles.

The type of a column filler used in the GPC is not particularly limited, but, for example, a rigid or semi-rigid, cross-linked macromolecular polymer, and glass or silica with a controlled pore size may be used. The filler may withstand a pressure of up to 20,68 × 10⁶ Pa (3000 psi) and aqueous solutions and various polar organic solvents may be used. Porous glass and silica may be used after being prepared to have various pore sizes. These fillers are chemically resistant to pH of 10 or less, and are resistant to aqueous solutions and polar organic solvents. In the case of using a non-polar solvent, the surface must be deactivated by silylation in order to avoid irreversible retention by polar solutes. The packing volume may be maintained constant at a high flow rate and high pressure.

The GPC device is not particularly limited, but may consist of, for example, a pump, a sample injector, and a detector.

The pump must be able to maintain a constant flow rate, and requires reproducibility of the flow rate, particularly, reproducibility independent of viscosity of the polymer. In addition, when analysis is performed at a high temperature, it is generally required to raise the temperature to 55°C or higher.

The amounts of the sample and the standard material injected into the sample injector should be equal, and in general, Rheodyne, U6K, auto injector type, etc. may be used. The injection amounts of the sample and the standard material are usually about 50 µl to 100 µl per column.

The type of the detector is not particularly limited, but for example, a differential refractometer and a spectrophotometric detector operating in the ultraviolet and infrared regions may be used. The detector has an operating volume of 1 ml to 10 ml in an exclusion tube having a length of 3 m to 6 m, and the analysis time is usually less than 30 minutes.

With respect to the copolycarbonate into which the polysiloxane structure is introduced by the above described method, the weight average molecular weight, the number average molecular weight, and the molecular weight distribution of the polysiloxane-containing aromatic diol compound used as a starting material may be accurately analyzed.

Meanwhile, according to one exemplary embodiment of the present invention, nuclear magnetic resonance (NMR) may be additionally performed on the copolycarbonate into which the polysiloxane structure is introduced. The structures of the repeating units constituting the copolycarbonate may be inferred by NMR analysis, and therefore, even when the repeating unit of the copolycarbonate to be analyzed by the present invention, i.e., the polysiloxane-containing aromatic diol compound includes a functional group decomposable in methanol, the weight average molecular weight, the number average molecular weight, and the molecular weight distribution of the repeating unit may be obtained by taking together the structure analyzed by NMR.

The present invention will be described in more detail with reference to the following exemplary embodiments.

### <Example>

### Preparation Example of Copolycarbonate

### Preparation Example 1

A copolycarbonate including a first repeating unit derived from bisphenol A (BPA) of LG Chem, Ltd. and a second repeating unit derived from a polysiloxane-containing aromatic diol compound having the following structural formula (including polysiloxane-containing aromatic diol compound in an amount of 7% by weight, based on the total weight of the copolycarbonate) was prepared.

The following polysiloxane-containing aromatic diol compound used as a starting material had a weight average molecular weight of 4,830 g/mol, a number average molecular weight of 3,300 g/mol, and a molecular weight distribution (Mw/Mn) of 1.47.

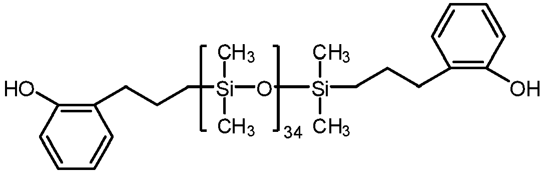

### Preparation Example 2

Copolycarbonate FG1700 of Idemitsu Co., including a repeating unit derived from a polysiloxane-containing aromatic diol compound, was prepared.

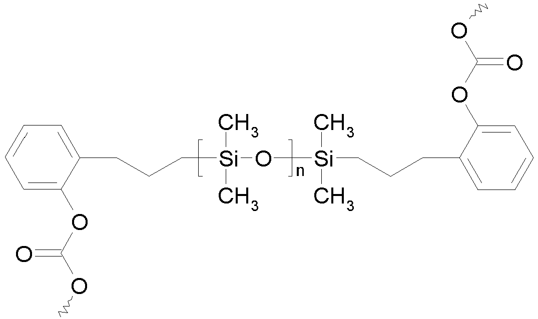

### Preparation Example 3

Copolycarbonate EXL1414 of Sabic Corp., including a repeating unit derived from a polysiloxane-containing aromatic diol compound, was prepared.

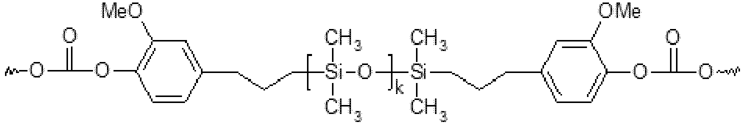

### Preparation Example 4

Copolycarbonate 3022PJ of Samyang Corp., including a repeating unit derived from a polysiloxane-containing aromatic diol compound, was prepared.

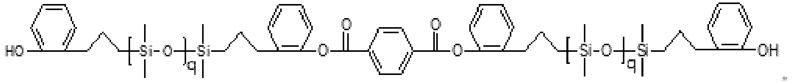

The repeating units of Preparation Examples 2 to 4 were structures analyzed by NMR.

### <Example>

### Example 1

1 g of the copolycarbonate pellet of Preparation Example 1 was dissolved in 2 ml of toluene, and 34 mg of NaOH was dissolved in 1 ml of methanol, and these two solutions were mixed. The mixed solution was heated at 60 °C under stirring, and allowed to react for 6 hr until no pellet forms were left.

After the decomposition reaction was completed, the decomposition product including the polysiloxane-containing diol compound was quenched in liquid nitrogen at -196°C, and 4 g of the decomposition product was diluted in 200 ml of a tetrahydrofuran (THF) solvent to prepare a sample of about 20,000 ppm, of which molecular weight was measured using a Agilent 1200 series GPC system through an RI detector at a flow rate of 1 ml/min. To calculate the molecular weight of the sample, eight PS standards were used to prepare a calibration curve, and based on the curve, the weight average molecular weight, the number average molecular weight, and the molecular weight distribution of the sample were determined and shown in Table 1 below.

**[Table 1]**

| | Weight average molecular weight (Mw, unit: g/mol) | Number average molecular weight (Mn, unit: g/mol) | Molecular weight distribution (PDI, Mw/Mn) |
|---|---|---|---|
| Reference Example (polysiloxane-containing aromatic diol compound used as starting material) | 4,830 | 3,300 | 1.47 |
| Example 1 | 5,050 | 3,340 | 1.51 |

Referring to Table 1, the weight average molecular weight, the number average molecular weight, and the molecular weight distribution of the decomposed polysiloxane-containing aromatic diol compound with respect to the weight average molecular weight, the number average molecular weight, and the molecular weight distribution of the polysiloxane-containing aromatic diol compound which is a starting material before polymerization were about 104%, about 101%, and about 103%, respectively, indicating that the error was within 5%, as compared with the measured values of the actual starting material.

### Examples 2 to 4

The copolycarbonates of Preparation Examples 2 to 4 were decomposed in the same manner as in Example 1.

4 g of the decomposition product including the decomposed polysiloxane-containing diol compound was diluted in 200 ml of a tetrahydrofuran (THF) solvent to prepare a sample of about 20,000 ppm, of which molecular weight was measured using a Agilent 1200 series GPC system through an RI detector at a flow rate of 1 ml/min. To calculate the molecular weight of the sample, eight PS standards were used to prepare a calibration curve, and based on the curve, the weight average molecular weight, the number average molecular weight, and the molecular weight distribution of each sample were determined.

The structures of the copolycarbonates of Preparation Examples 2 to 4 were analyzed by ¹H-NMR using Varian 500 MHz, and the number average molecular weight of the polysiloxane-containing diol compound was measured.

For the analysis of the molecular weight of the polysiloxane-containing diol compound by ¹H-NMR, the number of the repeating unit derived from the polysiloxane-containing diol compound was calculated using proton, and multiplied by the molecular weight of one repeating unit, which may be determined as the number average molecular weight.

The weight average molecular weight and the number average molecular weight, which were measured for the polysiloxane-containing aromatic diol compounds of Examples 2 to 4 by GPC and NMR, respectively, were compared in Table 2 below.

**[Table 2]**

| | Weight average molecular weight (unit: g/mol) as measured by GPC | Number average molecular weight (unit: g/mol) as measured by NMR | Number average molecular weight (unit: g/mol) as measured by GPC | Molecular weight distribution as measured by GPC |
|---|---|---|---|---|
| Example 2 | 6,190 | 5,750 | 4,600 | 1.35 |
| Example 3 | 5,660 | 4,000 | 3,990 | 1.42 |
| Example 4 | 3,170 | 4,770 | 2,470 | 1.28 |

Referring to Table 2, the number average molecular weights of the polysiloxane-containing aromatic diol compounds decomposed according to the method of the present invention were about 80%, about 99.8%, and about 51.8% of those of the copolycarbonates including different structures of polysiloxane, as measured by NMR.

In the case of Example 4, the number average molecular weight measured by GPC was about 51% of the number average molecular weight measured by NMR, which may be attributed to that the polysiloxane-containing aromatic diol compound includes ester bonds during analysis of its structure by NMR, and these ester bonds are also decomposed during methanolysis. Accordingly, considering the decomposition of the ester bonds, it is almost consistent with the number average molecular weight measured by NMR.

## Claims

1. A method of analyzing a copolycarbonate, the method comprising:
reacting the copolycarbonate including a first repeating unit derived from an aromatic diol compound and a second repeating unit derived from a polysiloxane-containing aromatic diol compound with methanol to decompose the copolycarbonate into the aromatic diol compound and the polysiloxane-containing aromatic diol compound; and
performing gel permeation chromatography of the decomposed polysiloxane-containing aromatic diol compound,
wherein the step of reacting the copolycarbonate with methanol includes the steps of dissolving an alkali in methanol to prepare an alkali hydroxide solution; and reacting the prepared alkali hydroxide solution with the copolycarbonate to perform an alkali-catalyzed alcoholysis reaction,
wherein the alkali-catalyzed alcoholysis reaction is performed at 40°C to 80°C.

2. The method of claim 1, wherein the step of performing gel permeation chromatography of the decomposed polysiloxane-containing aromatic diol compound is performed by quenching the decomposition product including the decomposed polysiloxane-containing aromatic diol compound using liquid nitrogen and then diluting the product, followed by GPC.

3. The method of claim 2, comprising no process of separately extracting the polysiloxane-containing aromatic diol compound from the decomposition product.

4. The method of claim 1, wherein the first repeating unit is represented by the following Chemical Formula 1: 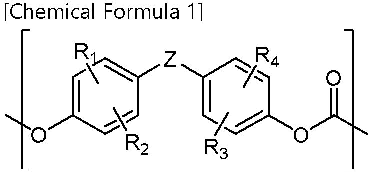 in Chemical Formula 1,
R₁ to R₄ are each independently hydrogen, C₁₋₁₀ alkyl, C₁₋₁₀ alkoxy, or halogen, and
Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

5. The method of claim 1, wherein the second repeating unit is represented by any one of the following Chemical Formula 2 to Chemical Formula 5: 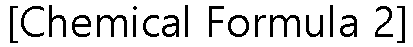 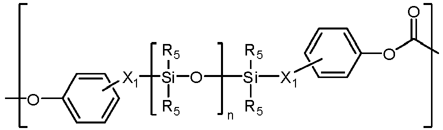 in Chemical Formula 2,
X, is each independently C₁₋₁₀ alkylene,
R₅ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
n is an integer of 10 to 200, 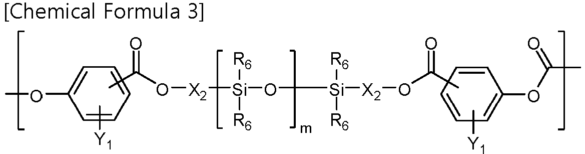 in Chemical Formula 3,
X₂ is each independently C₁₋₁₀ alkylene,
Y₁ is each independently hydrogen, C₁₋₆ alkyl, halogen, hydroxy, C₁₋₆ alkoxy, or C₆₋₂₀ aryl,
R₆ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
m is an integer of 10 to 200, 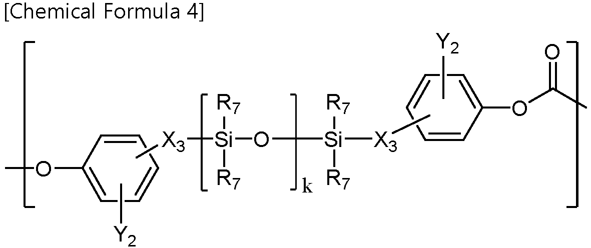 in Chemical Formula 4,
X₃ is each independently C₁₋₁₀ alkylene,
Y₂ is each independently hydrogen, C₁₋₆ alkyl, halogen, hydroxy, C₁₋₆ alkoxy, or C₆₋₂₀ aryl,
R₇ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
k is an integer of 10 to 200, 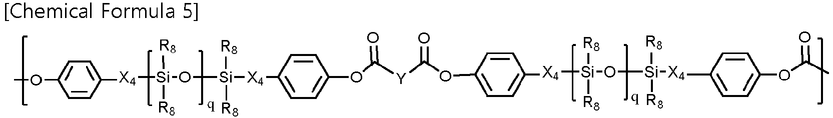 in Chemical Formula 5,
X₄ is each independently C₁₋₁₀ alkylene,
Y is C₁₋₁₀ alkylene or C₆₋₂₀ arylene,
R₈ is each independently hydrogen; unsubstituted or oxiranyl, oxiranyl-substituted C₁₋₁₀ alkoxy, or C₆₋₂₀ aryl-substituted C₁₋₁₅ alkyl; halogen; C₁₋₁₀ alkoxy; allyl; C₁₋₁₀ haloalkyl; or C₆₋₂₀ aryl, and
q is an integer of 10 to 200.

6. The method of claim 4, wherein the repeating unit represented by Chemical Formula 1 is derived from an aromatic diol compound represented by the following Chemical Formula 1-1: 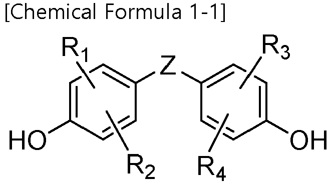 in Chemical Formula 1-1,
R₁ to R₄ and Z are the same as defined in Chemical Formula 1.

7. The method of claim 5, wherein the repeating unit represented by Chemical Formula 2 is derived from a polysiloxane compound represented by the following Chemical Formula 2-1: 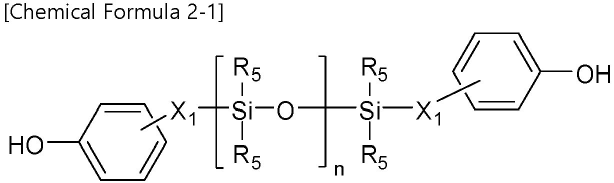 in Chemical Formula 2-1,
X₁, R₅ and n are the same as defined in Chemical Formula 2.

8. The method of claim 5, wherein the repeating unit represented by Chemical Formula 3 is derived from a polysiloxane compound represented by the following Chemical Formula 3-1: 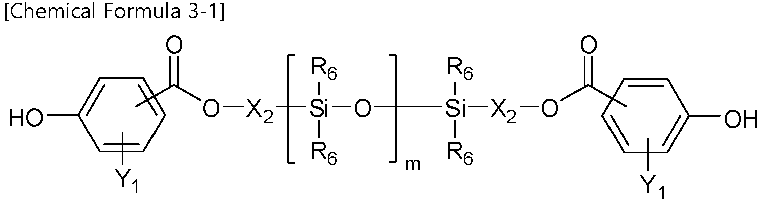 in Chemical Formula 3-1,
X₂, Y₁, R₆ and m are the same as defined in Chemical Formula 3.

9. The method of claim 1, wherein a weight average molecular weight, a number average molecular weight, and a molecular weight distribution are obtained by the gel permeation chromatography.

10. The method of claim 1, further comprising the step of performing nuclear magnetic resonance (NMR) of the copolycarbonate.

## Patentansprüche

1. Verfahren zum Analysieren eines Copolycarbonats, wobei das Verfahren umfasst:
Umsetzen des Copolycarbonats, das eine erste Wiederholungseinheit, die von einer aromatischen Diolverbindung abgeleitet ist, und eine zweite Wiederholungseinheit, die von einer polysiloxanhaltigen aromatischen Diolverbindung abgeleitet ist, enthält, mit Methanol, um das Copolycarbonat in die aromatische Diolverbindung und die polysiloxanhaltige aromatische Diolverbindung zu zersetzen; und
Durchführen einer Gelpermeationschromatographie der zersetzten polysiloxanhaltigen aromatischen Diolverbindung,
wobei der Schritt des Umsetzens des Copolycarbonats mit Methanol die Schritte des Auflösens eines Alkalis in Methanol, um eine Alkalihydroxidlösung herzustellen; und des Umsetzens der hergestellten Alkalihydroxidlösung mit dem Copolycarbonat, um eine alkalikatalysierte Alkoholysereaktion durchzuführen, umfasst,
wobei die alkalikatalysierte Alkoholysereaktion bei 40 °C bis 80 °C durchgeführt wird.

2. Verfahren nach Anspruch 1, wobei der Schritt des Durchführens einer Gelpermeationschromatographie der zersetzten polysiloxanhaltigen aromatischen Diolverbindung durch Quenchen des Zersetzungsprodukts, das die zersetzte polysiloxanhaltige aromatische Diolverbindung enthält, unter Verwendung von flüssigem Stickstoff und dann Verdünnen des Produkts, gefolgt von GPC, durchgeführt wird.

3. Verfahren nach Anspruch 2, das keinen Prozess des getrennten Extrahierens der polysiloxanhaltigen aromatischen Diolverbindung aus dem Zersetzungsprodukt umfasst.

4. Verfahren nach Anspruch 1, wobei die erste Wiederholungseinheit durch die folgende chemische Formel 1 dargestellt wird: 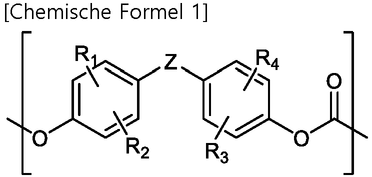 wobei in der chemischen Formel 1
R₁ bis R₄ jeweils unabhängig Wasserstoff, C₁₋₁₀ -Alkyl, C₁₋₁₀ -Alkoxy oder Halogen sind und
Z C₁₋₁₀ -Alkylen, unsubstituiert oder substituiert mit Phenyl, C₃₋₁₅ -Cycloalkylen, unsubstituiert oder substituiert mit C₁₋₁₀ -Alkyl, O, S, SO, SO₂ oder CO ist.

5. Verfahren nach Anspruch 1, wobei die zweite Wiederholungseinheit durch eine der folgenden chemischen Formeln 2 bis 5 dargestellt wird: 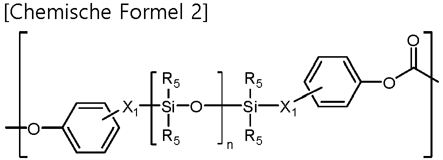 wobei in der chemischen Formel 2
X₁ jeweils unabhängig C₁₋₁₀ -Alkylen ist,
R₅ jeweils unabhängig Wasserstoff; unsubstituiertes oder Oxiranyl, Oxiranyl-substituiertes C₁₋₁₀ -Alkoxy oder C₆₋₂₀ -Aryl-substituiertes C₁₋₁₅ -Alkyl; Halogen; C₁₋₁₀ -Alkoxy; Allyl; C₁₋₁₀ - Halogenalkyl oder C₆₋₂₀ -Aryl ist und
n eine ganze Zahl von 10 bis 200 ist, 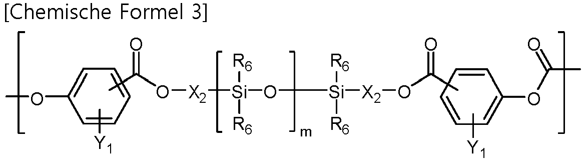 wobei in der chemischen Formel 3
X₂ jeweils unabhängig C₁₋₁₀ -Alkylen ist,
Y₁ jeweils unabhängig Wasserstoff, C₁₋₆ -Alkyl, Halogen, Hydroxy, C₁₋₆ -Alkoxy oder C₆₋₂₀ - Aryl ist,
R₅ jeweils unabhängig Wasserstoff; unsubstituiertes oder Oxiranyl, Oxiranyl-substituiertes C₁₋₁₀ -Alkoxy oder C₆₋₂₀ -Aryl-substituiertes C₁₋₁₅ -Alkyl; Halogen; C₁₋₁₀ -Alkoxy; Allyl; C₁₋₁₀ - Halogenalkyl oder C₆₋₂₀ -Aryl ist und
m eine ganze Zahl von 10 bis 200 ist, 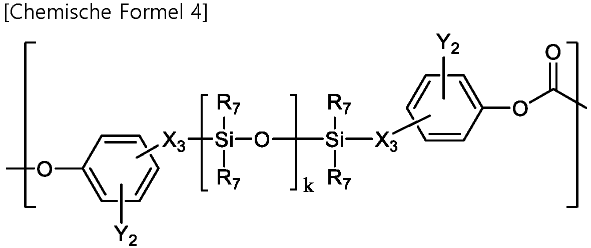 wobei in der Chemischen Formel 4
X₃ jeweils unabhängig C₁₋₁₀ -Alkylen ist,
Y₂ jeweils unabhängig Wasserstoff, C₁₋₆ -Alkyl, Halogen, Hydroxy, C₁₋₆ -Alkoxy oder C₆₋₂₀ - Aryl ist,
R₇ jeweils unabhängig Wasserstoff; unsubstituiertes oder Oxiranyl, Oxiranyl-substituiertes C₁₋₁₀ -Alkoxy oder C₆₋₂₀ -Aryl-substituiertes C₁₋₁₅ -Alkyl; Halogen; C₁₋₁₀ -Alkoxy; Allyl; C₁₋₁₀ - Halogenalkyl oder C₆₋₂₀ -Aryl ist und
k eine ganze Zahl von 10 bis 200 ist, 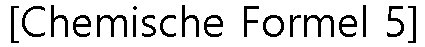 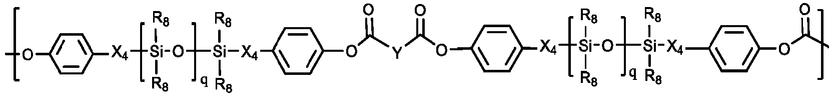 wobei in der Chemischen Formel 5
X₄ jeweils unabhängig C₁₋₁₀ -Alkylen ist,
Y C₁₋₁₀ -Alkylen oder C₆₋₂₀ -Arylen ist,
R₈ jeweils unabhängig Wasserstoff; unsubstituiertes oder Oxiranyl, Oxiranyl-substituiertes C₁₋₁₀ -Alkoxy oder C₆₋₂₀ -Aryl-substituiertes C₁₋₁₅ -Alkyl; Halogen; C₁₋₁₀ -Alkoxy; Allyl; C₁₋₁₀ - Halogenalkyl oder C₆₋₂₀ -Aryl ist und
q eine ganze Zahl von 10 bis 200 ist.

6. Verfahren nach Anspruch 4, wobei die durch die chemische Formel 1 dargestellte Wiederholungseinheit von einer aromatischen Diolverbindung abgeleitet ist, die durch die folgende chemische Formel 1-1 dargestellt wird: 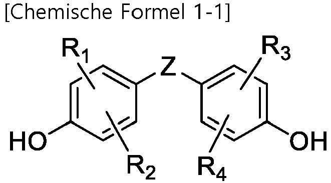 wobei in der chemischen Formel 1-1
R₁ bis R₄ und Z dieselben wie in der chemischen Formel 1 definiert sind.

7. Verfahren nach Anspruch 5, wobei die durch die chemische Formel 2 dargestellte Wiederholungseinheit von einer Polysiloxanverbindung abgeleitet ist, die durch die folgende chemische Formel 2-1 dargestellt wird: 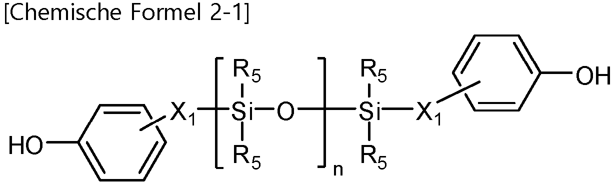 wobei in der chemischen Formel 2-1
X₁, R₅ und n dieselben wie in der chemischen Formel 2 definiert sind.

8. Verfahren nach Anspruch 5, wobei die durch die chemische Formel 3 dargestellte Wiederholungseinheit von einer Polysiloxanverbindung abgeleitet ist, die durch die folgende chemische Formel 3-1 dargestellt wird: 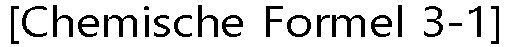 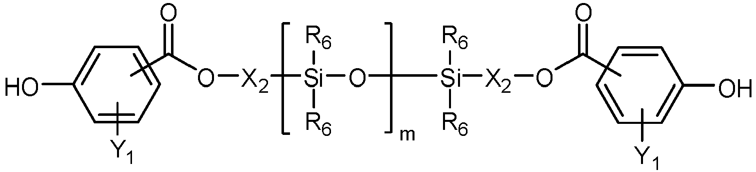 wobei in der chemischen Formel 3-1
X₂, Y₁, R₆ und m dieselben wie in der chemischen Formel 3 definiert sind.

9. Verfahren nach Anspruch 1, wobei ein gewichtsgemitteltes Molekulargewicht, ein zahlengemitteltes Molekulargewicht und eine Molekulargewichtsverteilung durch die Gelpermeationschromatographie erhalten werden.

10. Verfahren nach Anspruch 1, das ferner den Schritt des Durchführens einer Kernspinresonanz (NMR) des Copolycarbonats umfasst.

## Revendications

1. Procédé d'analyse d'un copolycarbonate, le procédé consistant à :
faire réagir le copolycarbonate incluant une première unité de répétition dérivée d'un composé de diol aromatique et une deuxième unité de répétition dérivée d'un composé de diol aromatique contenant du polysiloxane avec du méthanol pour décomposer le copolycarbonate en composé de diol aromatique et composé de diol aromatique contenant du polysiloxane ; et
effectuer une chromatographie par perméation de gel GPC du composé de diol aromatique contenant du polysiloxane décomposé,
dans lequel l'étape consistant à faire réagir le copolycarbonate avec du méthanol inclut les étapes consistant à dissoudre un alcalin dans du méthanol pour préparer un solution d'hydroxyde alcalin ; et consistant à faire réagir la solution d'hydroxyde alcalin préparée avec le copolycarbonate pour effectuer une réaction d'alcoolyse catalysée par un alcalin,
dans lequel la réaction d'alcoolyse catalysée par un alcalin est effectuée à 40°C à 80°C.

2. Procédé selon la revendication 1, dans lequel l'étape consistant à effectuer une chromatographie par perméation de gel GPC du composé de diol aromatique contenant du polysiloxane décomposé est effectuée en refroidissant le produit de décomposition incluant le composé de diol aromatique contenant du polysiloxane décomposé en utilisant de l'azote liquide, puis en diluant le produit, suivi d'une GPC.

3. Procédé selon la revendication 2, ne comprenant aucun processus consistant à extraire séparément le composé de diol aromatique contenant du polysiloxane du produit de décomposition.

4. Procédé selon la revendication 1, dans lequel la première unité de répétition est représentée par la Formule chimique ci-après 1 : 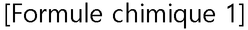 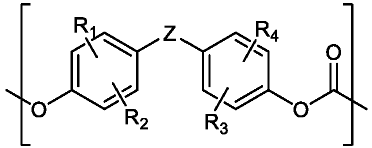 dans la Formule chimique 1,
les R₁ à R₄ sont chacun indépendamment un hydrogène, un alkyle en C₁₋₁₀, un alkoxy en C₁₋₁₀ ou un halogène, et
Z est un alkylène en C₁₋₁₀ non substitué ou substitué par un phényle, un cycloalkylène en C₃₋₁₅ non substitué ou substitué par un alkyle en C₁₋₁₀, O, S, SO, SO₂ ou CO.

5. Procédé selon la revendication 1, dans lequel la deuxième unité de répétition est représentée par l'une quelconque des Formules chimiques 2 à 5 ci-après : 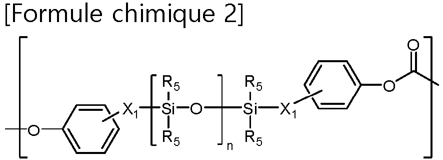 dans la Formule chimique 2,
les X₁ sont chacun indépendamment un alkylène en C₁₋₁₀,
les R₅ sont chacun indépendamment un hydrogène ; un alkoxy en C₁₋₁₀ non substitué ou substitué par un oxyranyle, ou un alkyle en C₁₋₁₅ substitué par un aryle en C₆₋₂₀ ; un halogène ; un alkoxy en C₁₋₁₀ ; un allyle ; un haloalkyle en C₁₋₁₀ ; ou un aryle en C₆₋₂₀, et
n est un nombre entier de 10 à 200, 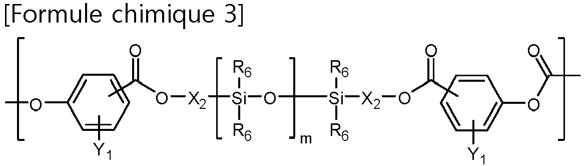 dans la Formule chimique 3,
les X₂ sont chacun indépendamment un alkylène en C₁₋₁₀,
les Y₁ sont chacun indépendamment un hydrogène, un alkyle en C₁₋₆, un halogène, un hydroxy, un alkoxy en C₁₋₆ ou un aryle en C₆₋₂₀,
les R₆ sont chacun indépendamment un hydrogène ; un alkoxy en C₁₋₁₀ non substitué ou substitué par un oxyranyle, ou un alkyle en C₁₋₁₅ substitué par un aryle en C₆₋₂₀ ; un halogène ; un alkoxy en C₁₋₁₀ ; un allyle ; un haloalkyle en C₁₋₁₀ ; ou un aryle en C₆₋₂₀, et
m est un nombre entier de 10 à 200, 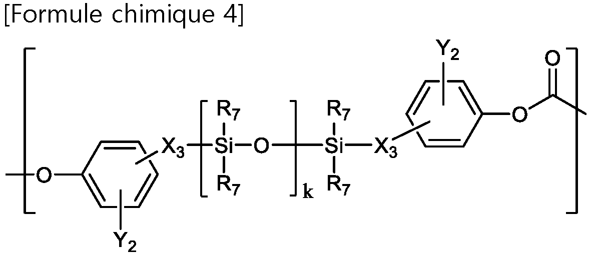 dans la Formule chimique 4,
les X₃ sont chacun indépendamment un alkylène en C₁₋₁₀,
les Y₂ sont chacun indépendamment un hydrogène, un alkyle en C₁₋₆, un halogène, un hydroxy, un alkoxy en C₁₋₆ ou un aryle en C₆₋₂₀,
les R₇ sont chacun indépendamment un hydrogène ; un alkoxy en C₁₋₁₀ non substitué ou substitué par un oxyranyle ou un alkyle en C₁₋₁₅ substitué par un aryle en C₆₋₂₀ ; un halogène ; un alkoxy en C₁₋₁₀ ; un allyle ; un haloalkyle en C₁₋₁₀ ; ou un aryle en C₆₋₂₀, et
k est un nombre entier de 10 à 200, 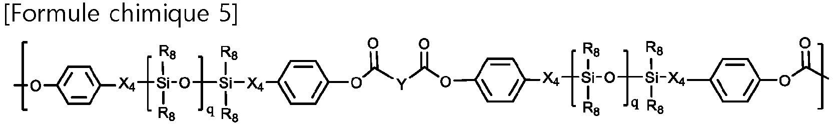 dans la Formule chimique 5,
les X₄ sont chacun indépendamment un alkylène en C₁₋₁₀,
les Y sont un alkylène en C₁₋₁₀ ou un arylène en C₆₋₂₀,
les Rₛ sont chacun indépendamment un hydrogène, un alkoxy en C₁₋₁₀ non substitué ou substitué par un oxyranyle ou un alkyle en C₁₋₁₅ substitué par un aryle en C₆₋₂₀ ; un halogène ; un alkoxy en C₁₋₁₀ ; un allyle ; un haloalkyle en C₁₋₁₀ ; ou un aryle en C₆₋₂₀, et
q est un nombre entier de 10 à 200.

6. Procédé selon la revendication 4, dans lequel l'unité de répétition représentée par la Formule chimique 1 est dérivée d'un composé de diol aromatique représenté par la Formule chimique 1-1 ci-après : 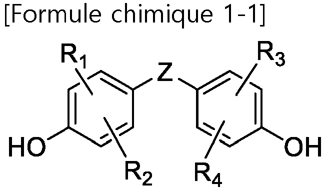 dans la Formule chimique 1-1,
les R₁ à R₄ et Z sont identiques à ceux définis dans la Formule chimique 1.

7. Procédé selon la revendication 5, dans lequel l'unité de répétition représentée par la Formule chimique 2 est dérivée d'un composé de polysiloxane représenté par la Formule chimique 2-1 ci-après : 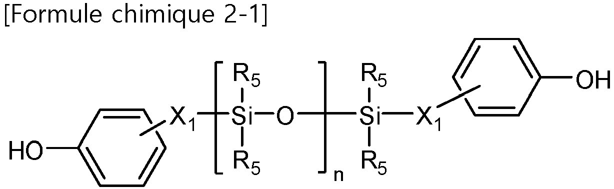 dans la Formule chimique 2-1,
X₁, R₅ et n sont identiques à ceux définis dans la Formule chimique 2.

8. Procédé selon la revendication 5, dans lequel l'unité de répétition représentée par la Formule chimique 3 est dérivée d'un composé de polysiloxane représenté par la Formule chimique 3-1 ci-après : 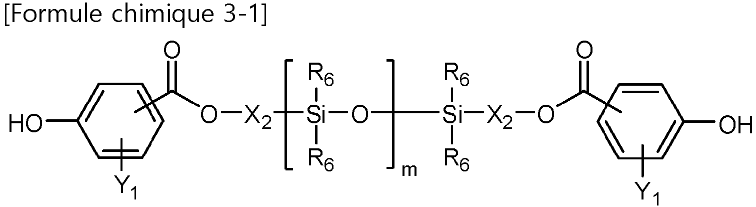 dans la Formule chimique 3-1,
X₂, Y₁, R₆ et m sont identiques à ceux définis dans la Formule chimique 3.

9. Procédé selon la revendication 1, dans lequel un poids moléculaire moyen en poids, un poids moléculaire moyen en nombre et une distribution de poids moléculaire sont obtenus par chromatographie par perméation de gel GPC.

10. Procédé selon la revendication 1, comprenant en outre l'étape consistant à effectuer une résonance magnétique nucléaire (NMR) du copolycarbonate.
